# EUROPEAN PATENT APPLICATION

(11) **EP 4 644 800 A1**
(43) Date of publication of application: **05.11.2025**
(21) Application number: 24173452.4
(22) Date of filing: 30.04.2024
(51) Int. Cl.: F25B 13/00, B60H 1/00, B60H 1/32, F25B 47/02, F25B 49/02

(54) **A REVERSIBLE HEAT PUMP**

(71) Applicant: Trane Technologies International Limited, Swords, K67 EW96 Dublin (IE)
(72) Inventor: LUCKE, Christoph, Minneapolis, Minnesota, 55420 (US); ECKE, Andreas, 45359 Essen (DE); LAVASAS, Vasilios, 45892 Gelsenkirchen (DE); ENGLERT, Daniel, 44137 Dortmund (DE)
(74) Representative: Haseltine Lake Kempner LLP

(57) **Abstract**

There is provided a reversible heat pump comprising a refrigerant circuit, the refrigerant circuit comprising: a compressor; an expansion device; an internal heat exchanger for heat transfer with a climate controlled space and provided with an internal fan; an external heat exchanger for heat transfer with ambient air and provided with an external fan; a pressure switch configured to generate a signal indicative of refrigerant pressure at a monitoring location in the refrigerant circuit; and a controller. The controller is configured to operate the reversible heat pump in both a heating mode and a defrost mode. In the heating mode, refrigerant is directed, in order, through the compressor, the internal heat exchanger, the expansion device and the external heat exchanger, before being directed back to the compressor. In the defrost mode, refrigerant is directed, in order, through the compressor, the external heat exchanger, the expansion device and the internal heat exchanger, before being directed back to the compressor. In the defrost mode both the internal and external fans are deactivated so as not to direct airflow over the internal and external heat exchangers, respectively. The controller is configured to switch from the heating mode to the defrost mode in response to a signal from the pressure switch indicative of a pressure in the refrigerant circuit that is less than a threshold pressure.

## Description

The present disclosure relates to a reversible heat pump and a computer implemented method for operating the reversible heat pump.

### Background

Reversible heat pumps are used for transferring heat from one heat exchange medium to another, for example between a controlled environment and an ambient environment. Typically, a reversible heat pump comprises a heat exchanger in the ambient environment, a heat exchanger in the controlled environment and a refrigerant circuit that connects the two heat exchangers.

Examples applications of such heat pumps include a chiller system (e.g. for centrally heating and cooling a process fluid such as water that circulates within a building or other installation to heat transfer terminals, e.g. for room heating), or a refrigeration system such as an HVAC system or a transport refrigeration system (TRU).

Operating a reversible heat pump in a heating mode in which heat is transferred from the ambient environment to the controlled environment can result in the build-up of frost on the heat exchanger in the ambient environment. The present disclosure relates to improved methods of detecting and defrosting a frosted heat exchanger in a reversible heat pump.

### Summary

In a first aspect of the invention, there is provided a reversible heat pump comprising a refrigerant circuit, the refrigerant circuit comprising:
a compressor;
an expansion device;
an internal heat exchanger for heat transfer with a climate controlled space and provided with an internal fan;
an external heat exchanger for heat transfer with ambient air and provided with an external fan;
a pressure switch configured to generate a signal indicative of refrigerant pressure at a monitoring location in the refrigerant circuit; and
a controller;

wherein the controller is configured to operate the reversible heat pump in both a heating mode and a defrost mode;
   wherein, in the heating mode, refrigerant is directed, in order, through the compressor, the internal heat exchanger, the expansion device and the external heat exchanger, before being directed back to the compressor;
   wherein, in the defrost mode, refrigerant is directed, in order, through the compressor, the external heat exchanger, the expansion device and the internal heat exchanger, before being directed back to the compressor;
wherein in the defrost mode both the internal and external fans are deactivated so as not to direct airflow over the internal and external heat exchangers, respectively; and
wherein the controller is configured to switch from the heating mode to the defrost mode in response to a signal from the pressure switch indicative of a pressure in the refrigerant circuit that is less than a threshold pressure.

In the heating mode, both the internal and external fans may be activated to direct airflow over the internal and external heat exchangers, respectively.

In the defrost mode, the controller may operate the reversible heat pump in a defrost phase and a drying phase, wherein in the defrost phase both the internal and external fans are deactivated so as not to direct airflow over the internal and external heat exchangers respectively, and wherein in the drying phase the external fan is activated to direct airflow over the external heat exchanger

In the drying phase, the external fan may be operated at an increased output.

The controller may be configured to terminate the defrost mode and begin a temperature recovery mode prior to resuming the heating mode, the temperature recovery mode comprising directing refrigerant, in order, through the compressor, the internal heat exchanger, the expansion device and the external heat exchanger, before directing refrigerant back to the compressor; and
wherein, in the temperature recovery mode, the internal fan is deactivated or operated at a reduced output.

The controller may be further configured to operate the reversible heat pump in a cooling mode in which refrigerant is directed, in order, through the compressor, the external heat exchanger, the expansion device and the internal heat exchanger, before being directed back to the compressor;
wherein in the cooling mode the both the internal and external fans are activated to direct airflow over the internal and external heat exchangers respectively.

The pressure switch may be disposed on a suction pressure zone of the refrigerant circuit leading to an inlet of the compressor in the heating mode. The suction pressure zone may be a suction line of the refrigerant circuit. The controller may be configured to switch from the heating mode to the defrost mode in response to a signal from the pressure switch indicative of a pressure in the suction line that is less than a threshold pressure.

The refrigerant circuit may further comprise a four-way valve comprising an inlet configured to receive fluid from the compressor and an outlet configured to convey refrigerant towards the compressor; the compressor being disposed in a one-way compressor loop that extends between the inlet and the outlet, wherein the four-way valve further comprises a first port which is in fluid communication with the internal heat exchanger and a second port which is in fluid communication with the external heat exchanger.

The four-way valve 22 may be configured to selectively couple one of the first port and the second port to the inlet, and to couple the other of the first port and the second port to the outlet.

In a second aspect of the invention, there is provided a vehicle comprising the reversible heat pump of the first aspect, the vehicle comprising a storage compartment, wherein the external heat exchanger is disposed outside of the storage compartment and the internal heat exchanger is disposed inside of the storage compartment.

In a third aspect there is provided a computer implemented method for operating a refrigerant circuit, the refrigerant circuit comprising:
a compressor;
an expansion device;
an internal heat exchanger for heat transfer with a climate controlled space and provided with an internal fan;
an external heat exchanger for heat transfer with ambient air and provided with an external fan; and
a pressure switch configured to generate a signal indicative of refrigerant pressure at a monitoring location in the refrigerant circuit;
the method comprising:
operating the refrigerant circuit in a heating mode;
switching from the heating mode to a defrost mode in response to a signal from the pressure switch indicative of a pressure that is less than a threshold pressure;
   wherein, in the heating mode, refrigerant is directed, in order, through the compressor, the internal heat exchanger, the expansion device and the external heat exchanger, before being directed back to the compressor; and
   wherein, in the defrost mode, refrigerant is directed, in order, through the compressor, the external heat exchanger, the expansion device and the internal heat exchanger, before being directed back to the compressor; and
   wherein in the defrost mode both the internal and external fans are deactivated so as not to direct airflow over the internal and external heat exchangers, respectively.

The method may further comprise, in the heating mode, activating the both the internal and external fans to direct airflow over both the internal and external heat exchangers, respectively.

The method may further comprise, in the defrost mode, operating the reversible heat pump in a defrost phase and a drying phase, wherein in the defrost phase both the internal and external fans are deactivated so as not to direct airflow over the internal and external heat exchangers respectively, and wherein in the drying phase the external fan is activated to direct airflow over the external heat exchanger

The method may further comprise, in the drying phase, operating the external fan at an increased output.

The method may further comprise, terminating the defrost mode and beginning a temperature recovery mode prior to resuming the heating mode, the temperature recovery mode comprising directing refrigerant, in order, through the compressor, the internal heat exchanger, the expansion device and the external heat exchanger, before directing refrigerant back to the compressor; and
wherein, in the temperature recovery mode, the internal fan is deactivated or operated at a reduced output.

The method may further comprise operating the reversible heat pump in a cooling mode in which refrigerant is directed, in order, through the compressor, the external heat exchanger, the expansion device and the internal heat exchanger, before being directed back to the compressor;
wherein in the cooling mode both the internal and external fans are activated to direct airflow over the internal and external heat exchangers, respectively.

The pressure switch may be disposed on a suction line of the refrigerant circuit leading to an inlet of the compressor in the heating mode, wherein the method may further comprise switching from the heating mode to the defrost mode in response to a signal from the pressure switch indicative of a pressure in the suction line that is less than a threshold pressure.

In a fourth aspect there is provided a computer readable medium having stored thereon computer executable instructions to cause a controller to perform the method of the third aspect.

### Brief Description of the Drawings

Figure 1 is a schematic representation of a reversible heat pump showing a first mode of operation;
Figure 2 is a schematic representation of a reversible heat pump showing a second mode of operation;
Figure 3 is a schematic circuit diagram showing a controller in communication with controllable aspects of the heat pump;
Figure 4 shows a vehicle comprising a transport refrigeration unit incorporating the reversible heat pump of figures 1 and 2; and
Figure 5 is a flow diagram showing program logic for operating the heat pump.

### Detailed Description

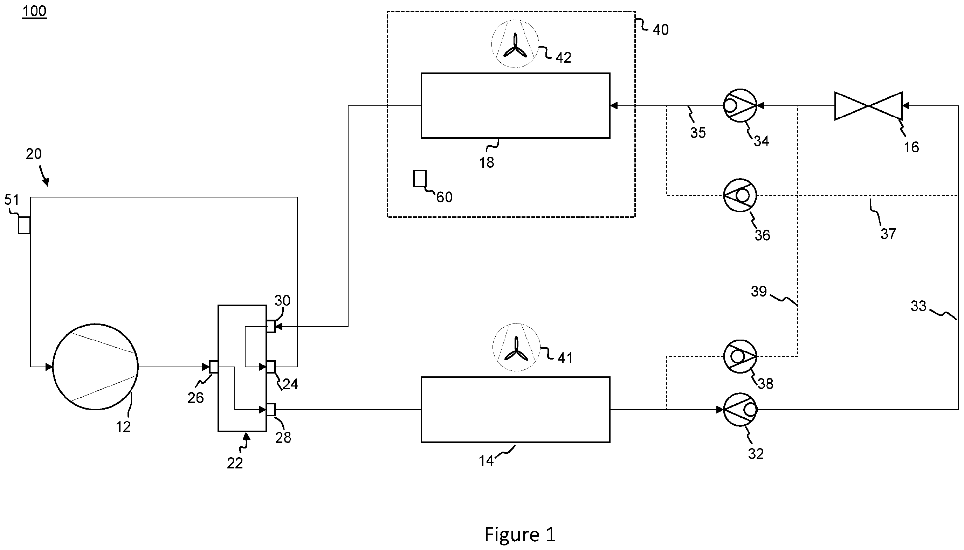

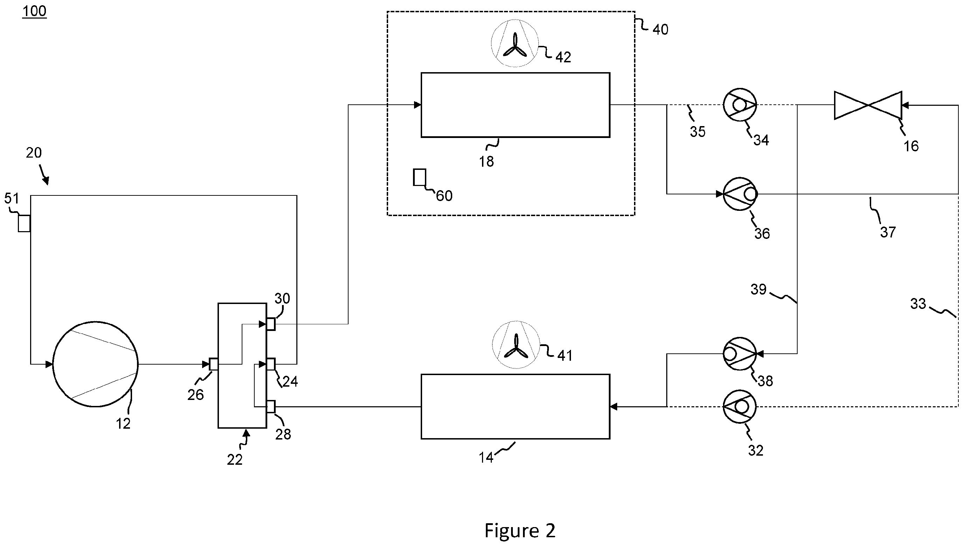

Figures 1 and 2 schematically show an example heat pump 100 for transferring heat from one heat exchange medium to another, for example between a climate controlled space and an ambient environment. Examples applications of such heat pumps include a chiller system (e.g. for centrally heating and cooling a process fluid such as water that circulates within a building or other installation to heat transfer terminals, e.g. for room heating), or a refrigeration system such as an HVAC system or a transport refrigeration system.

Figures 1 and 2 illustrate a refrigerant circuit of a heat pump 100 comprising a compressor 12, an internal heat exchanger 18 for heat transfer with the climate controlled space, an expansion device 16, and an external heat exchanger 14 for heat transfer with ambient air.

The heat pump 100 is configured to define two flow paths through the heat pump for operation in different modes, namely a cooling mode (or cooling configuration) and a heating mode (or heating configuration). Such heat pumps are conventionally known as a reversible heat pump.

The expressions "heating" and "cooling" refer to the direction of heat transfer with respect to a heat exchange medium which is being actively heated or cooled, for example to maintain a set-point temperature in a climate controlled space (e.g. air in a cargo space, or process fluid/water in a chiller system). In the present disclosure, this is referred to as the regulated heat exchange medium 40.

In the example configuration of Figure 1, there is a flow path (indicated by arrows) extending through, in flow order, the compressor 12, the external heat exchanger 14 which functions as a condenser for discharging heat to an ambient heat exchange medium (e.g. ambient air), the expansion device 16, the internal heat exchanger 18 which functions as an evaporator for receiving heat from a regulated heat exchange medium 40, returning to the compressor 12. Accordingly, the flow path of Figure 1 is for a cooling mode of operation with respect to the regulated heat exchange medium 40, and it is the internal heat exchanger 18 which is in thermal communication with the regulated heat exchange medium.

In contrast, in the example configuration of Figure 2, there is a flow path (indicated by arrows) extending through, in flow order, the compressor 12, the internal heat exchanger 18 which functions as a condenser for discharging heat to the regulated heat exchange medium 40, the expansion device 16, the external heat exchanger 14 to receive heat from the ambient heat exchange medium, returning to the compressor 12. Accordingly, the flow path of Figure 2 is for a heating mode of operation with respect to the regulated heat exchange medium 40.

While there are many common components between the two flow paths, the paths of fluid communication between them differ in the respective modes, passing through appropriate valves to direct the flow. In the present disclosure, for each mode (i.e. each of the cooling and heating modes), a portion of the flow path between the compressor 12 and the condenser is referred to as the discharge line, a portion of the flow path between the condenser and the expansion device 16 is referred to as the liquid line, a portion of the flow path between the expansion device 16 and the evaporator is referred to as the distribution line, and a portion of the flow path between the evaporator and the compressor is referred to as the suction line. Nevertheless, it is to be appreciated that some sections of conduit (or pipe etc.) which form part of one of the discharge line, liquid line, distribution line, and suction line in one mode may form part of another one of such lines in the other mode. As such, in the configuration of the heat pump 100 of Figures 1 and 2, there is not a constant "liquid line" and "suction line" etc, as the particular path depends on the mode, as will be described below.

Although other arrangements are possible, in the example of Figures 1 and 2, the compressor 12 is disposed within a one-way compressor loop 20 which connects to a remainder of the flow path via a four-way valve 22. The four-way valve 22 has an outlet 24 which conveys refrigerant towards the compressor 12 and an inlet 26 which receives fluid from the compressor 12, with the one-way compressor loop 20 extending between the outlet 24 and the inlet 26. The four-way valve 22 further comprises a first port 30 which is in fluid communication with the internal heat exchanger 18 and a second port 28 which is in fluid communication with the external heat exchanger 14. The four-way valve 22 is configured to selectively couple one of the first port 30 and the second port 28 to the inlet 26 (to convey refrigerant received from the compressor to the respective heat exchanger 18, 14), and to couple the other of the first port 30 and the second port 28 to the outlet 24 (to convey refrigerant received from the respective heat exchanger 18, 14 to the compressor 12). In other examples, other flow control (e.g. valve) arrangements may be used to similar effect.

Each of the internal and external heat exchangers 18, 14 has a compressor side port for fluid communication with the four-way valve 22 and thereby the compressor, and an opposing expansion side port for fluid communication with the expansion device 16, either along a respective liquid line or a respective distribution line as will be described in further detail below.

The heat pump comprises first and second liquid lines 33, 37 that are configured to direct refrigerant to the expansion device 16. The first liquid line 33 extends from the expansion side port of the external heat exchanger 14 to the expansion device 16 to direct refrigerant from the external heat exchanger 14 to the expansion device 16 in the cooling mode. The second liquid line 37 extends from the expansion side port of the internal heat exchanger 18 to the expansion device 16 to direct refrigerant from the internal heat exchanger 18 to the expansion device 16 in the heating mode. Each of the first and second liquid lines 33, 37 are provided with a respective first and second stop valve 32, 36. In the cooling mode, first stop valve 32 is open to allow refrigerant to flow along the first liquid line 33, while the second stop valve 36 is closed to prevent the flow of refrigerant along the second liquid line 37. In the heating mode, the second stop valve 36 is open to allow refrigerant to flow along the second liquid line 37, while the first stop valve 32 is closed to prevent the flow of refrigerant along the first liquid line 33.

The heat pump comprises first and second distribution lines 35, 39 that are configured to direct refrigerant to the internal and external heat exchangers 18, 14, respectively. The first distribution line 35 extends from the expansion device 16 to the expansion side port of the internal heat exchanger 18 to direct refrigerant from the expansion device 16 to the internal heat exchanger 18 in the cooling mode. The second distribution line 39 extends from the expansion device 16 to the expansion side port of the external heat exchanger 14 to direct refrigerant from the expansion device 16 to the external heat exchanger 14 in the heating mode. Each of the first and second distribution lines 35, 39 are provided with a respective third and fourth stop valve 34, 38. In the cooling mode, third stop valve 34 is open to allow refrigerant to flow along the first distribution line 35, while the fourth stop valve 38 is closed to prevent the flow of refrigerant along the second distribution line 39. In the heating mode, the fourth stop valve 38 is open to allow refrigerant to flow along the second distribution line 39, while the third stop valve 34 is closed to prevent the flow of refrigerant along the first distribution line 35.

In the cooling configuration of Figure 1, the discharge line is partially located within the compressor loop 20 between the compressor 12 and the four-way valve 22, with the remainder of the discharge line extending from the second port 28 to the compressor side port of the external heat exchanger 14 (functioning as a condenser).

A suction line is in part provided by a connection between the compressor side port of the internal heat exchanger 18 and the first port 30 of the four-way valve 22, and is in part provided by the portion of the compressor loop 20 extending to the compressor 12.

In use in the cooling configuration, gaseous refrigerant is compressed at the compressor 12 to a high pressure and is condensed in the external heat exchanger 14 functioning as the condenser to reject heat to the ambient heat exchange medium and to provide high pressure condensed refrigerant in the liquid line pathway. The condensed refrigerant is expanded at the expansion device 16, to provide a multi-phase refrigerant flow to the internal heat exchanger 18 functioning as the evaporator. This flow is evaporated in the internal heat exchanger 18, before being provided to the compressor 12. Evaporation at the internal heat exchanger 18 cools the regulated heat exchange medium associated 40 with the internal heat exchanger 18.

In the heating configuration of Figure 2, the discharge line is once again partially located within the compressor loop 20 between the compressor 12 and the four-way valve 22, with the remainder extending from the first port 30 to the compressor side port of the internal heat exchanger 18 (functioning as a condenser).

A suction line is in part provided by a connection between the compressor side port of the external heat exchanger 14 and the second port 28 of the four-way valve 22, and is in part provided by the portion of the compressor loop 20 extending to the compressor 12 (as described above).

In use in the heating configuration, gaseous refrigerant is compressed at the compressor 12 to a high pressure and is condensed in the internal heat exchanger 18 functioning as the condenser to reject heat to the regulated heat exchange medium 40 and to provide high pressure condensed refrigerant in the liquid line. The condensed refrigerant is expanded at the expansion device 16, to provide a multi-phase refrigerant flow to the external heat exchanger 14 functioning as the evaporator. This flow is evaporated in the external heat exchanger 14, before being provided to the compressor 12. Evaporation at the external heat exchanger 14 causes the refrigerant to absorb heat from the ambient heat exchange medium.

Each of the internal and external heat exchangers 18, 14 are provided with a respective internal and external fan 42, 41 configured to direct an airflow over the internal and external heat exchangers 18, 14. By directing an airflow over the internal and external heat exchangers 18, 14, the amount of heat rejected or absorbed by each of the internal and external heat exchangers 18, 14 is increased. In either the cooling or heating modes, both the internal and external fans 42, 41 are operated to increase the rate of transfer of heat out of or into the regulated heat exchange medium 40.

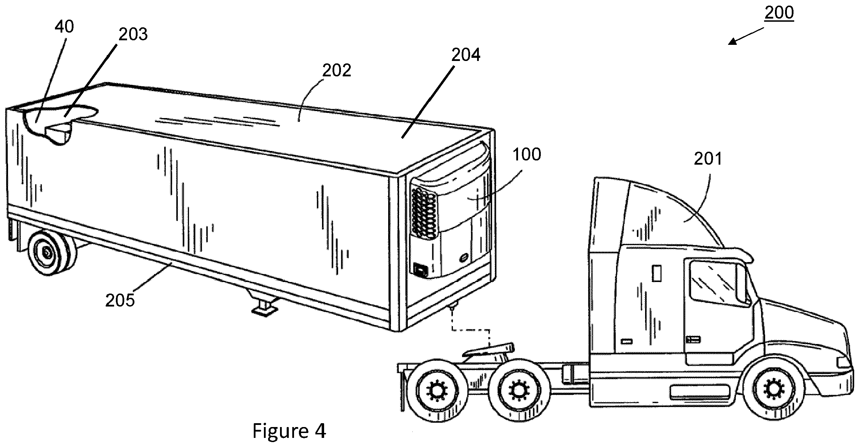

Figure 4 shows an application of the heat pump 100 by way of example. The heat pump 100 serves as a transport refrigeration unit (TRU) 100 that is configured to either heat or cool a climate-controlled module 202 of a vehicle 200. The climate-controlled module 202 comprises a storage compartment 203 that forms the regulated heat exchange medium 40 in which goods to be transported are stored. Thus, the external heat exchanger 14 is disposed outside of the storage compartment 203 and the internal heat exchanger 18 is disposed inside of the storage compartment 203.

In the example of figure 4, the climate-controlled module 202 is an over-the-road refrigerated semi-trailer 204 having a structure 205 supporting (or forming) the storage compartment 203. The structure 205 also supports the TRU 100. The vehicle 200 further comprises a tractor unit 201 removably couplable to the trailer 204.

While the example of figure 4 depicts a trailer 204 and tractor unit 201, it will be appreciated that the heat pump 100 described herein can serve as a TRU 100 for any number of mobile climate-controlled modules that include, but are not limited to, an over-the-road trailer, an over-the road truck body, a bus, a transport container and a railway car. The climate-controlled modules can take the form of multiple compartments or have multiple zones.

In applications of the heat pump 100 such as that depicted in figure 4, a problem arises when the vehicle 200 is operated in cold conditions. For example, where the ambient temperature is less than a set-point temperature for the regulated heat exchange medium 40, the heat pump 100 is operated in the heating mode to maintain the set-point temperature. This means operating the external heat exchanger 14 as an evaporator to absorb heat from the ambient heat exchange medium (i.e. the outside air). Water vapour in the air can condense on exterior surfaces of the external heat exchanger 14 which may then freeze, causing frosting of the external heat exchanger 14.

While a TRU is shown in figure 4 as part of a vehicle. It will be appreciated that the TRU may be used to heat or cool any climate controlled module whether part of a vehicle or not. In some examples, a static climate controlled module may be used with a TRU comprising a heat pump 100 as described herein.

In examples of the invention, to defrost the external heat exchanger 14, the heat pump 100 is temporarily put into a defrost mode. In the defrost mode refrigerant is directed around the heat pump 100 as described for the cooling mode. This means operating the external heat exchanger 14 as a condenser so that heat is rejected by the external heat exchanger 14 to dissipate any built-up frost. The defrost mode comprises a defrost phase and a drying phase. In the defrost phase both the internal and external fans 42, 41 are deactivated to reduce heat transfer from the internal and external heat exchangers 18, 14, respectively. This raises the temperature of the external heat exchanger 14 faster than if the external fan 41 remained on, thereby increasing the rate of defrosting of the external heat exchanger 14. By deactivating the internal fan 42, excessive cooling of the regulated heat exchange medium 40 is avoided which might otherwise lead to frost burn of any product stored in the regulated heat exchange medium 40.

During the defrost phase, the compressor 12 is optionally operated at a maximum or increased power level to increase the heat rejection at the external heat exchanger 14 for quicker defrosting of the external heat exchanger 14. The increased power level may be a power level that exceeds the average power level at which the compressor 12 is operated at during either the heating or cooling mode. The defrost phase may last for around 90 seconds or, for example, between 60 seconds and 120 seconds, or between 80 seconds and 100 seconds.

The drying phase begins after the defrost phase ends. In the drying phase, the external fan 41 is reactivated, the internal fan 42 is deactivated and the compressor 12 is stopped. In this way, heat transfer at the external heat exchanger 14 is minimized in the drying phase, conserving heat.

In the drying phase, the external fan 41 is operated at an increased or maximum power level to direct the greatest possible volumetric flow rate of air across the external heat exchanger 14. This removes meltwater that has accumulated on external surfaces of the external heat exchanger 14 during the defrost phase. In one example, the increased power level is a power level that exceeds the average power level that the external fan 41 is operated at during either the heating or cooling modes. The drying phase may last for around 15 seconds or, for example, between 5 seconds and 25 seconds, or between 10 seconds and 20 seconds.

The heat pump 100 further comprises a pressure switch 51 in a suction pressure zone of the refrigerant circuit. In the illustrated example, the pressure switch 51 is provided on the suction line of the compressor loop 20. The pressure switch 51 is configured to indicate a pressure of the refrigerant in the suction line. The heat pump 100 is configured to switch between the heating mode and the defrost mode when the refrigerant pressure in the suction line falls below a threshold pressure indicating poor performance of the external heat exchanger 14.

Following the defrost mode, the heat pump 100 is configured to operate a temperature recovery mode. The temperature recovery mode is intended to pre-heat the internal heat exchanger 18 prior to resumption of the heating mode. In the temperature recovery mode refrigerant is directed around the heat pump 100 as described for the heating mode. This means operating the internal heat exchanger 18 as a condenser so that heat is rejected at the internal heat exchanger 18. In the temperature recovery mode, the internal fan 42 is deactivated so to reduce heat transfer from the internal heat exchanger 18 and allow heat soak to occur, quickly reheating the internal heat exchanger 18 prior to resumption of the heating mode. On resumption of the heating mode, the internal fan 42 is reactivated to increase heat transfer to the regulated heat exchange medium 40.

In the temperature recovery mode, the external fan 41 is optionally operated at the increased or maximum power level. The compressor 12 may also be operated at the increased or maximum power level. By operating either, or both, the external fan 41 and compressor 12 at the increased or maximum power level, the rate of heat rejection at the internal heat exchanger 18 is increased, thereby reducing the time for temperature recovery. The temperature recovery mode may last for around 15 seconds or, for example, between 5 seconds and 25 seconds, or between 10 seconds and 20 seconds.

The heat pump 100 is further provided with a controller configured to operate the heat pump 100 in either the cooling mode or the heating mode, and to switch between the cooling and heating modes in response to a user request or any measured variable, such as the temperature of the regulated heat exchange medium. The controller is also configured to switch between the heating mode and the defrost mode in response to information from the pressure switch 51.

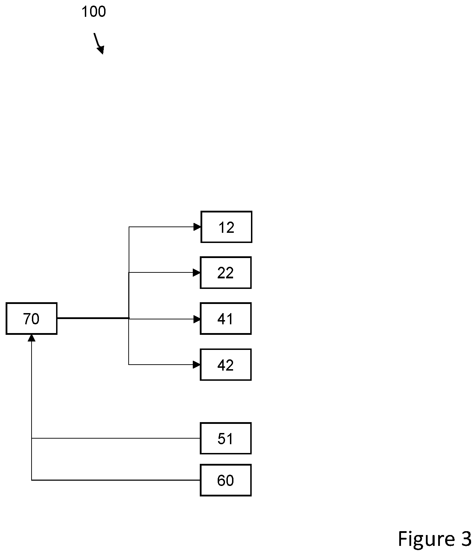

Figure 3 shows a circuit diagram showing the controller 70 in communication with various controllable aspects of the heat pump 100. The controller 70 is any suitable computing device configured to transmit signals to operate the controllable aspects of the heat pump 100 in accordance with any of the modes of operation described herein, including, but not limited to, the heating mode, the cooling mode, the defrost mode and the temperature recovery mode. Among other controllable aspects of the heat pump 100, the controller is configured to transmit signals to operate the four-way valve 22; the internal and external fans 41, 42 and the compressor 12. The controller is further configured to receive signals from the pressure switch 51 and a thermometer 60. The thermometer may be configured to measure variance from the set-point temperature of the regulated heat exchange medium 40 to enable the controller to switch between heating and cooling modes accordingly.

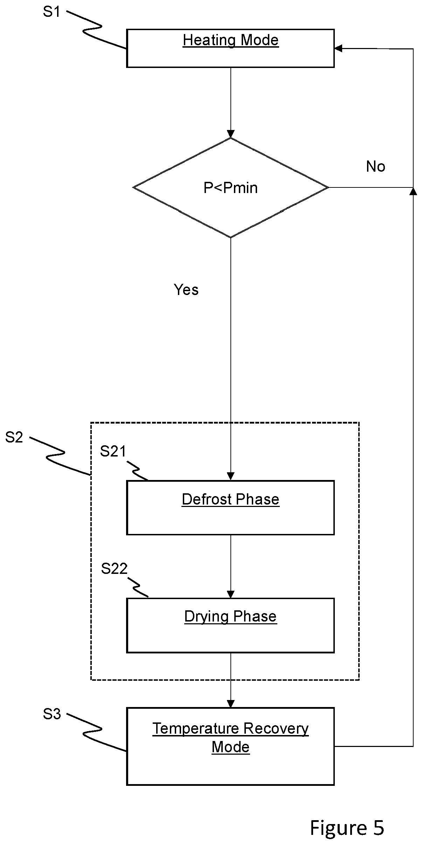

Figure 5 is a flow chart showing steps performed by the controller 70 to operate the heat pump 100 in the defrost mode S2. Starting from the heating mode S1, the controller is configured to monitor a signal P from the pressure switch 51 and switch from the heating mode S1 to the defrost mode S2 in response to the signal P from the pressure switch being indicative of a pressure in the refrigerant circuit that is less than a threshold pressure Pₘᵢₙ. To adopt the defrost mode S2, the controller 70 is configured to transmit a control signal to the four-way valve 22 to cause refrigerant to be directed , in order, through the compressor 12, the external heat exchanger 14, the expansion device 16 and the internal heat exchanger 18; before being directed back to the compressor 12. Therefore, on instruction from the controller 70, the four-way valve 22 connects the inlet 26 to the second port 28 causing the first and third stop valves 32,34 to open and the second and fourth stop valves 36, 38 to close. In the defrost phase S21 the controller 70 is configured to deactivate both the internal and external fans 42, 41 and operate the compressor 12 (optionally at the maximum or increased power level). The controller 70 is configured to end the defrost phase S21 and begin the drying phase S22 after a predetermined time period. In the drying phase S22, the controller 70 is configured to operate the external fan 41 for a second predetermined time period and to stop the compressor 12. Operating the external fan 41 for the second predetermined time period comprises operating the external fan 41 at an increased or maximum power level. As discussed, the increased power level is a power level that exceeds the average power level that the external fan 41 is operated at during either the heating or cooling modes.

The controller 70 is configured to terminate the defrost mode and begin the temperature recovery mode prior to resuming the heating mode. To adopt the temperature recovery mode, the controller 70 is configured to transmit a control signal to the four-way valve 22 and compressor 12 to cause refrigerant to be directed, in order, through the compressor 12, the internal heat exchanger 14, the expansion device 16 and the external heat exchanger 14; before directing refrigerant back to the compressor 12. Therefore, on instruction from the controller 70, the four-way valve 22 connects the inlet 26 to the first port 30 to cause the second and fourth stop valves 36, 38 to open and the first and third stop valves 32,34 to close. The controller 70 is configured to deactivate the internal fan 42 and activate the compressor 12 in the temperature recovery mode so as not to direct airflow over the internal heat exchanger 18.

The controller 70 is configured to produce an error signal in response to the signal from the pressure switch 51 being indicative of a pressure that is less than the threshold pressure if said signal from the pressure switch 51 is received less than a predetermined period of time tₘᵢₙ since completion of the last defrost mode. The predetermined period of time tₘᵢₙ can be measured from any point during last defrost mode, such as initiation of the last defrost mode when. In other words, the predetermined period of time tₘᵢₙ may be the time elapsed between successive signals from the pressure switch 51 indicating a pressure below the threshold pressure. The error signal may cause a display to indicate to an operator that the functioning of the external heat exchanger is impaired by a condition other than frost. The display may prompt the operator to take some form of remedial action such as, for example, clearing the external heat exchanger of debris. Such debris may be any debris that could impair the functioning of the external heat exchanger such as, for example, leaf litter. The controller 70 may be configured to cause the display to prompt the operator only after resumption of the heating mode.

It will be appreciated that an advantage of the present disclosure is that a TRU comprising a heat pump 100 like that shown in figures 1 and 2 can be made to successfully operate in colder conditions in which there is a risk of poor performance of the external heat exchanger 14 due to the build up of frost. Existing TRUs can be adapted in accordance with the invention by updating the software of the TRU controller to carry out the steps identified at figure 5. Many TRUs already incorporate many of the controllable aspects shown in Figs. 1 and 2 and may need minimal hardware modification to operate successfully. In some examples, the only hardware modification may be the incorporation of the pressure switch 51 in the suction pressure zone of the refrigerant circuit, as described above.

## Claims

1. A reversible heat pump (100) comprising a refrigerant circuit, the refrigerant circuit comprising:
a compressor (12);
an expansion device (16);
an internal heat exchanger (18) for heat transfer with a climate controlled space and provided with an internal fan (42);
an external heat exchanger (14) for heat transfer with ambient air and provided with an external fan (41);
a pressure switch (51) configured to generate a signal indicative of refrigerant pressure at a monitoring location in the refrigerant circuit; and
a controller (70);
wherein the controller (70) is configured to operate the reversible heat pump (100) in each of a heating mode, a defrost mode and a temperature recovery mode;
wherein, in the heating and the temperature recovery modes, refrigerant is directed, in order, through the compressor (12), the internal heat exchanger (18), the expansion device (16) and the external heat exchanger (14), before being directed back to the compressor (12);
wherein, in the defrost mode, refrigerant is directed, in order, through the compressor (12), the external heat exchanger (14), the expansion device (16) and the internal exchanger (18), before being directed back to the compressor (12);
wherein the controller (70) is configured to switch from the heating mode to the defrost mode in response to a signal from the pressure switch (51) indicative of a pressure in the refrigerant circuit that is less than a threshold pressure, the controller (70) being further configured to terminate the defrost mode and begin the temperature recovery mode prior to resuming the heating mode;
wherein in the defrost mode the controller (70) operates the reversible heat pump in a defrost phase and a drying phase, wherein in the defrost phase both the internal and external fans (42, 41) are deactivated so as not to direct airflow over the internal and external heat exchangers (18, 14) respectively, and wherein in the drying phase the external fan (41) is activated to direct airflow over the external heat exchanger (14); and
wherein, in the temperature recovery mode, the internal fan (42) is deactivated or operated at a reduced output.

2. The reversible heat pump (100) of claim 1 wherein, in the heating mode, both the internal and external fans (42, 41) are activated to direct airflow over the internal and external heat exchangers, respectively.

3. The reversible heat pump (100) of claim 1 or claim 2, wherein, in the drying phase, the external fan (41) is operated at an increased output.

4. The reversible heat pump (100) of any preceding claim, wherein the controller (70) is further configured to operate the reversible heat pump (100) in a cooling mode in which refrigerant is directed, in order, through the compressor (12), the external heat exchanger (14), the expansion device (16) and the internal heat exchanger (18), before being directed back to the compressor (12);
wherein in the cooling mode both the internal and external fans (42, 41) are activated to direct airflow over the internal and external heat exchangers (18, 14), respectively.

5. The reversible heat pump (100) of any preceding claim, wherein the pressure switch (51) is disposed on a suction line of the refrigerant circuit leading to an inlet of the compressor (12) in the heating mode, and wherein the controller (70) is configured to switch from the heating mode to the defrost mode in response to a signal from the pressure switch (51) indicative of a pressure in the suction line that is less than a threshold pressure.

6. The reversible heat pump (100) of any preceding claim, wherein the refrigerant circuit further comprises a four-way valve (22) comprising an inlet (26) configured to receive fluid from the compressor (12) and an outlet (24) configured to convey refrigerant towards the compressor (12); the compressor (12) being disposed in a one-way compressor loop (20) that extends between the inlet (26) and the outlet (24), wherein the four-way valve (22) further comprises a first port (30) which is in fluid communication with the internal heat exchanger (18) and a second port (28) which is in fluid communication with the external heat exchanger (14).

7. The reversible heat pump (100) of claim 6, wherein the four-way valve (22) is configured to selectively couple one of the first port (30) and the second port (28) to the inlet (26), and to couple the other of the first port (30) and the second port (28) to the outlet (24).

8. A vehicle (200) comprising the reversible heat pump (100) of any of claims 1 to 7, the vehicle (200) comprising a storage compartment (203), wherein the external heat exchanger (14) is disposed outside of the storage compartment (203) and the internal heat exchanger (18) is disposed inside of the storage compartment (203).

9. A computer implemented method for operating a refrigerant circuit, the refrigerant circuit comprising:
a compressor (12);
an expansion device (16);
an internal heat exchanger (18) for heat transfer with a climate controlled space and provided with an internal fan (42);
an external heat exchanger for heat transfer with ambient air and provided with an external fan (41); and
a pressure switch (51) configured to generate a signal indicative of refrigerant pressure at a monitoring location in the refrigerant circuit;
the method comprising:
operating the refrigerant circuit in a heating mode (S1);
switching from the heating mode to a defrost mode (S2) in response to a signal from the pressure switch (51) indicative of a pressure that is less than a threshold pressure; and
terminating the defrost mode and initiating a temperature recovery mode (S3);
wherein, in the heating and temperature recovery modes, refrigerant is directed, in order, through the compressor (12), the internal heat exchanger (18), the expansion device (16) and the external heat exchanger (14), before being directed back to the compressor (12); and
wherein, in the defrost mode, refrigerant is directed, in order, through the compressor (12), the external heat exchanger (14), the expansion device (16) and the internal heat exchanger (18), before being directed back to the compressor (12); and
wherein in the method further comprises:
in the defrost mode: deactivating both of the internal and external fans (42, 41) in a defrost phase (S21) so as not to direct airflow over the internal and external heat exchangers (18, 14), respectively; and activating the external fan (41) in a drying phase (S22) to direct airflow over the external heat exchanger (14); and
in the temperature recovery mode: deactivating the internal fan (42) or operating the internal fan (42) at a reduced output.

10. A computer readable medium having stored thereon computer executable instructions to cause a controller (70) to perform the method of claim 9.
